# EUROPEAN PATENT APPLICATION

(11) **EP 4 696 609 A1**
(43) Date of publication of application: **18.02.2026**
(21) Application number: 24796275.6
(22) Date of filing: 26.04.2024
(51) Int. Cl.: B64U 10/10, B64U 40/10

(54) **AERIAL VEHICLE**

(30) Priority: 28.04.2023 CN 202321031741 U
(71) Applicant: Zhuhai Hongdian Technology Co., Ltd., Zhuhai, Guangdong 519000 (CN)
(72) Inventor: CANG, Anguo, Zhuhai, Guangdong 519000 (CN); LIU, Yuanzhihong, Zhuhai, Guangdong 519000 (CN)
(74) Representative: Wang, Bo
(86) International application number: PCT/CN2024/090173
(87) International publication number: WO 2024/222904

(57) **Abstract**

An aerial vehicle, comprising a centrally-arranged coaxial multi-rotor power system, a chassis support assembly supporting the coaxial multi-rotor power system, counterweight blocks (100) arranged at the lower part of the chassis support assembly, and offset gravity center devices. The offset gravity center devices drive the counterweight blocks (100) to eccentrically shift, thereby shifting the center of gravity of the aerial vehicle and deflecting the whole aerial vehicle accordingly. The counterweight blocks are batteries (100), the batteries (100) and the offset gravity center devices being distributed centrally symmetrically about the axis of a rotor shaft. By adjusting positions of the batteries, the aerial vehicle is upright or inclined in the air. The aerial vehicle exhibits good anti-collision performance and saves electric energy.

## Description

### CROSS REFERENCE OF RELATED APPLICATION

This application is based on Chinese Patent Application No. CN 2023210317417, filed on April 28, 2023, and claims the priority thereof. The disclosure of the Chinese application is hereby incorporated herein in its entirety by reference.

### BACKGROUND OF THE PRESENT INVENTION

### FIELD OF INVENTION

The present invention relates to the technical field of aircraft used for maritime supervision and measurement, waterborne salvage and rescue operations, and agricultural plant protection operations, and in particular, to an aircraft.

### DESCRIPTION OF RELATED ARTS

Currently, an aircraft equipped with a coaxial dual-rotor power system commonly adopts a four-axis or six-axis symmetrical layout. The flight operations of such aircraft include various states such as ascending, hovering, turning, and level flight. During ascent, the lift force is greater than the takeoff weight; during hovering, the lift equals the takeoff weight. Turning is achieved by changing the rotational speed of one or more rotors on certain axes. Level flight is realized by decreasing the rotational speed of one or more rotors on one axis while simultaneously increasing the speed of the rotors on the opposite axis, thereby causing the aircraft body to tilt, and as a result, the lift force tilts accordingly, and the horizontal component of the lift propels the aircraft forward in level flight. Taking a typical four-axis coaxial dual-rotor aircraft as an example, it uses eight motors to drive the propellers, with eight electronic speed controllers respectively controlling the operating states of the motors. This configuration results in a complex structure, poor impact resistance, and low reliability.

### SUMMARY OF THE PRESENT INVENTION

This application provides an aerial vehicle with a simple structure and high reliability.

The following technical solution is adopted in this application.

An aerial vehicle comprises a coaxial multi-rotor power system which is centrally arranged, a chassis support assembly supporting the coaxial multi-rotor power system, counterweight blocks disposed below the chassis support assembly, and center-of-gravity offset arrangements which are respectively arranged to drive the counterweight blocks respectively to make an eccentric displacement, thereby shifting a center of gravity of the aerial vehicle and causing the entire aerial vehicle to deflect accordingly.

In this solution, compared to the calculation and control of different rotor speed differences and directional steering of multi-rotor aerial vehicles, this application adopts a single-axis dual-rotor design. It only requires an electric actuator to control the displacement of the counterweight, changing the center of gravity of the counterweight, so that the axis of the coaxial rotor assembly generating lift deflects. The balance between the vertical component of the deflection lift and the vertical gravity of the aerial vehicle controls the take-off and landing of the aerial vehicle. The horizontal component of the deflection lift provides the aerial vehicle with the power for level flight, diagonal upward or diagonal downward flight, thereby realizing the change of flight attitude by changing the position of the center of gravity of the counterweight. Moreover, the control mechanical structure is simple and has good impact resistance.

As an improvement to the above solution, the counterweights are batteries that power the aerial vehicle, and the batteries are centrally or symmetrically distributed, a weight of the batteries is greater than a total weight of the chassis support assembly and the coaxial dual-rotor power system, the center of gravity of the aerial vehicle is located in a lower half of a longitudinal height of the aerial vehicle, so that the aerial vehicle is statically in a top-light and bottom-heavy tumbler state.

As an improvement to the above solution, the chassis support assembly comprises a cylindrical protective frame with openings at the top and bottom, a bottom ring support frame, and support rods for connecting the cylindrical protective frame and the bottom ring support frame, wherein the cylindrical protective frame is located around rotors of the coaxial multi-rotor power system, and a center line of the cylindrical protective frame, a rotor rotation center, and an axis of the bottom ring support frame coincide.

As an improvement to the above solution, two parallel circles formed by the cylindrical protective frame and the bottom ring support frame form a generatrix of a frustum, and an angle between the generatrix and a diameter of the bottom ring support frame is an acute angle.

As an improvement to the above solution, each center-of-gravity offset arrangement comprises a rectangular frame, an electric push rod, and a ring sleeve fitted on the battery, a long side of the rectangular frame is radially arranged within an inner ring wall of the bottom ring support frame, one end of the electric push rod is fixed to the rectangular frame, and the other end thereof is connected to the ring sleeve, wherein by extension and retraction of the electric push rod, the corresponding battery moves away from or close to the axis line along the long side of the rectangular frame, thereby achieving the offset of the center of gravity of the aerial vehicle.

As an improvement to the above solution, four sets of the center-of-gravity offset arrangement are symmetrically arranged, the electric push rods gradually pull one battery to a side and then back to a position closer to a center, so as to allow the the center of gravity at a bottom of the aerial vehicle to shift and allow the aerial vehicle to tilt in a circular motion, causing the entire aerial vehicle to rotate 360 degrees. In this solution, "side" refers to the position furthest from the axis within the battery's movable path.

As an improvement to the above solution, the coaxial multi-rotor power system is configured as a dual-rotor power system which comprises a first motor and a second motor, wherein stators of the two motors are respectively fixedly connected to the upper and lower horizontal crossbars arranged in the cylindrical protective frame, wherein a rotor of the first motor is fixedly connected to a first rotor blade, and a rotor of the second motor is fixedly connected to a second rotor blade, the first motor and the second motor rotate in two opposite directions on a same axis.

As an improvement to the above solution, the dual-rotor power system further comprises two electronic speed controllers which are respectively arranged to control the start/stop status and speed of the first motor and the second motor.

As an improvement to the above solution, the coaxial multi-rotor power system is configured as a dual-rotor power system, which comprises a first motor and a second motor, wherein a rotor of the first motor is fixedly connected to a first rotor blade, and a rotor of the second motor is fixedly connected to a second rotor blade, wherein the first motor and the second motor rotate along a same axis.

The support rods comprises first support arms and a rotating shaft.

The bottom opening of the cylindrical protective frame is evenly distributed with a plurality of the first support arms to form an isosceles inverted pyramid, stators of the first motor and the second motor are hollow structures, a rotating shaft passes through the hollow stators of the first motor and the second motor, and a vertex of the isosceles inverted pyramid to connect the hollow stators of the first motor and the second motor.

As an improvement to the above solution, the support rods further comprise second support bars, with one end of a plurality of the second support bars evenly fixed on the bottom ring support frame, and the other end forming an isosceles pyramid or isosceles frustum.

As an improvement to the above scheme, a second crossbar is horizontally set at a top of the isosceles pyramid or isosceles frustum, and a support shaft is vertically set perpendicular to the second crossbar and coincident with the axis, a pivot located below the vertex of the isosceles inverted pyramid is hinged to the support shaft.

A first crossbar is horizontally set at the vertex of the isosceles inverted pyramid and at a lower side of the rotating shaft, wherein on two sides of the axis, two ends of each of two electric push arms are respectively hinged between the first crossbar and the second crossbar, wherein extension and retraction of the two electric push arms cause the first rotor blade and the second rotor blade to deflect or return to the axis by rotating at the hinge point between the axis and the support shaft.

A first horizontal bar is horizontally set at the apex and below the isosceles inverted pyramid. The two ends of an electric push rod are respectively hinged between the first and second horizontal bars on both sides of the axis. The extension and retraction of the two electric push rods cause the first and second rotor blades to deflect or return to the axis by rotating at the hinge point between the axis and the support shaft.

As an improvement to the above solution, the bottom ring support frame is locked with a high-impact polyamide foam material outside to form a cavity buoyancy body, and then sealed with a waterproof plastic cloth; or a fiberglass material fabric coating is prefabricated into a circumferential cavity body and then locked with the bottom ring support frame to form a cavity buoyancy body, wherein the cavity buoyancy body provides buoyancy for the aerial vehicle to float on water surface.

As an improvement to the above solution, the coaxial multi-rotor power system comprises a coaxial dual rotor, wherein the blade elementss of the two rotors rotate in opposite directions, and at least one coaxial dual rotor is provided.

As an improvement to the above solution, at least three wheel sets are evenly fixedly connected to the bottom ring support frame in a circumferential direction, one of which is a steering wheel, and a propeller is deployed at the center of the steering wheel frame to rotate coaxially with the steering wheel.

### Beneficial effects

1. This application is a coaxial dual-rotor aerial vehicle with a centrally located single axis. It uses two motors to drive the propellers and two electronic speed controllers to control the operation of the two motors. It can be seen that the number of motors and electronic speed controllers in a four-axis symmetrical coaxial dual-rotor aerial vehicle is four times that of this application. This application has four times fewer aerial vehicle parts, and its reliability is four times higher.
2. This application proposes a coaxial dual-rotor aerial vehicle with a centrally located uniaxial axis. The technical method for achieving level flight is to cleverly deploy the battery, which is essential for electric aerial vehicle, at the bottom of the aerial vehicle, so that the center of gravity of the aerial vehicle is at the bottom, making it a roly-poly state with the center of gravity in the center. By controlling the electric push rod to pull the bottom battery assembly to slide to the side, the center of gravity of the aerial vehicle is shifted, thereby tilting the aerial vehicle in the air and generating the thrust required for level flight.
3. By cleverly utilizing the batteries essential for electric aerial vehicle, which are housed in the bottom compartment, the aerial vehicle is in a centered, self-sustaining state. The energy consumption of the moving batteries is much less than that of driving the rotor.
4. Further experimental data demonstrates that a four-axis symmetrical coaxial dual-rotor aerial vehicle, with each motor at 4kW and a total power of 32kW by 8 motors, can take off at a maximum weight of 103kg. In contrast, a one-axis centrally located coaxial dual-rotor aerial vehicle, with each motor at 16kW and 2 motors at 32kW, can take off at a maximum weight of 130kg. This represents a 27% higher efficiency than the four-axis symmetrical coaxial dual-rotor aerial vehicle. This is because, in a four-axis aerial vehicle, to achieve level flight, one axis's motor must operate at less than its rated power, while the motors on the symmetrical axis must operate at most their rated power to tilt the aerial vehicle and achieve level flight. This application achieves fuselage tilting through battery offset, allowing both motors to operate at their rated power simultaneously for extended periods, resulting in higher efficiency.

### BRIEF DESCRIPTION OF THE DRAWINGS

FIG. 1 is a schematic view of a coaxial dual-rotor structure of an aerial vehicle according to a first embodiment of this application;

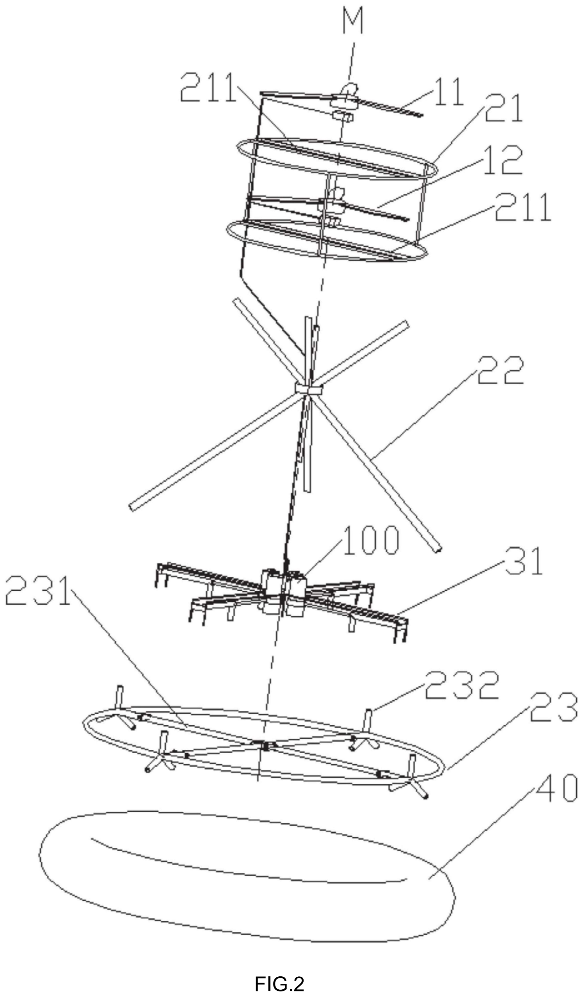

FIG. 2 is an exploded view of the aerial vehicle in FIG. 1;
FIG. 3 is a schematic view illustrating a center-of-gravity offset arrangement of an electric unmanned aerial vehicle according to the first embodiment of this application;
FIG. 4 is a schematic view illustrating a wheel assembly of the electric unmanned aerial vehicle according to the first embodiment of this application;

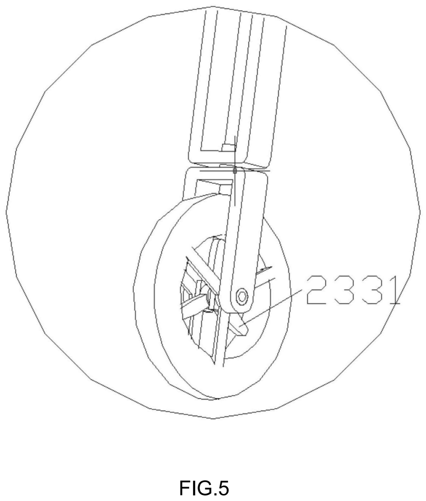

FIG. 5 is a schematic view illustrating a steering wheel of the electric unmanned aerial vehicle according to the first embodiment of this application;
FIG. 6 is a schematic view of a coaxial quadcopter structure of the electric unmanned aerial vehicle according to the first embodiment of this application;
FIG. 7 is a schematic view of a coaxial dual-rotor structure of the electric unmanned aerial vehicle according to a second embodiment of this application;

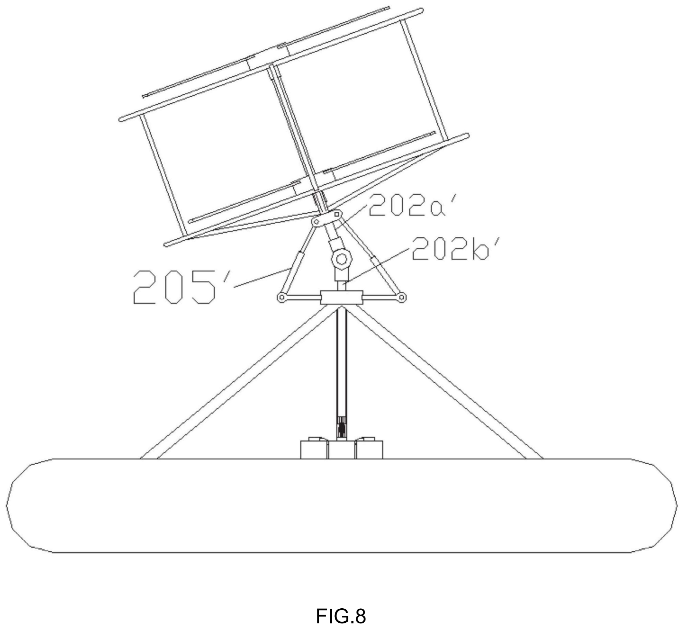

FIG. 8 is a schematic view of the coaxial dual-rotor deflection structure of the electric unmanned aerial vehicle according to the second embodiment of this application;
FIG. 9 is a schematic view of a coaxial quadcopter structure of an electric unmanned aerial vehicle according to the second embodiment of this application.

### DETAILED DESCRIPTION OF THE PREFERRED EMBODIMENT

The technical solutions in the embodiments of this application will be clearly and completely described below with reference to the accompanying drawings.

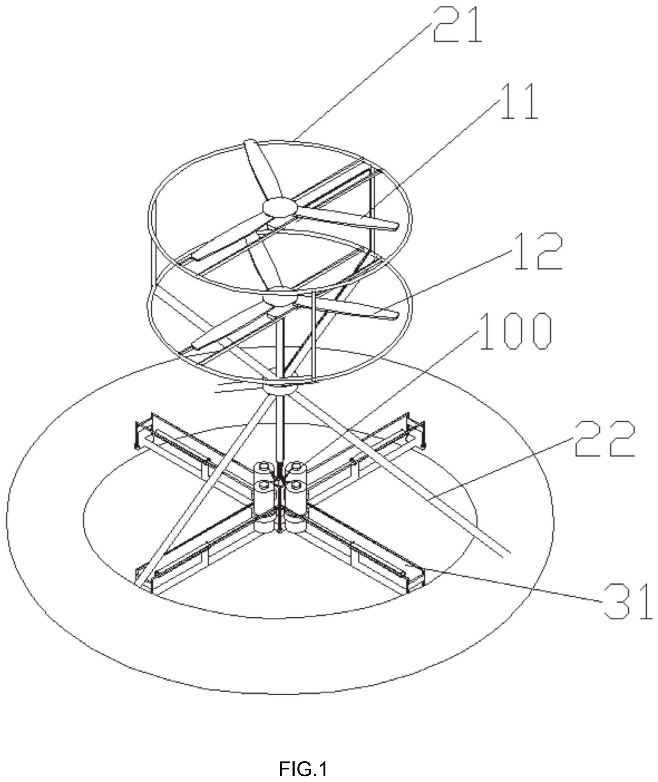

Referring to FIG. 1, it is a schematic view of a coaxial dual-rotor structure for an aerial vehicle according to a first embodiment of this application. The aerial vehicle comprises a coaxial dual-rotor power system, a chassis support assembly for supporting the coaxial dual-rotor power system, a battery 100 located below the chassis support assembly, and a center-of-gravity offset arrangement. The center-of-gravity offset arrangement drives a counterweight to make an eccentric displacement, causing the center of gravity of the aerial vehicle to shift and causing the entire aerial vehicle to tilt accordingly, so as to achieve various flight attitudes. The weight of the battery is greater than the combined weight of the chassis support assembly and the coaxial dual-rotor power system. The center of gravity of the aerial vehicle is located in the lower half of the longitudinal height of the aerial vehicle, resulting in a static, top-light, bottom-heavy, tumbler-like state, ensuring flight stability and preventing tipping.

The coaxial dual-rotor power system comprises a first motor, a first rotor blade 11 fixedly mounted on the rotor of the first motor, a second motor, a second rotor blade 12 fixedly mounted on the rotor of the second motor, and an electronic speed controller; the first rotor blade and the second rotor blade rotate in opposite directions. A control program is set to enable the electronic speed controller to control the start, stop, and speed of the first motor and/or the second motor.

The chassis support assembly comprises a cylindrical protective frame 21 with openings at the top and bottom and disposed around the periphery of the first and second rotor blades, a plurality of support rods 22, and a bottom ring support frame 23. One end of each support rod is connected to the lower end of the cylindrical protective frame with openings at the top and bottom, and the other end is connected to the bottom ring support frame. The support rods are evenly distributed. Two circles formed by the cylindrical protective frame with openings at the top and bottom and the bottom ring support frame form the generatrix of a frustum, and the angle between the generatrix and the diameter of the bottom ring support frame is acute. The cylindrical protective frame with openings at the top and bottom has two horizontally arranged crossbars 211. The stators of the first and second motors are centrally fixedly connected to the upper and lower crossbeams respectively. The first rotor blade has three rotor blade elements fixedly connected to the rotor of the first motor, and the second rotor blade has three blade elements fixedly connected to the rotor of the second motor. The first motor and the second motor rotate along the same axis M. Preferably, the support rods are arranged intersectingly to form an hourglass shape, with the intersection point 221 and the center of the bottom ring support frame located on the axis M.

The bottom ring support frame 23 also comprises radially perpendicular cross support rods 231 arranged on its inner ring wall. Four sets of center-of-gravity offset arrangement are fixedly installed on the four rod bodies of the cross support rods.

Each center-of-gravity offset arrangement comprises a rectangular frame 31, an electric push rod 32, and a ring sleeve 33 fitted onto the battery. The long side of the rectangular frame is radially arranged within the inner ring wall of the bottom ring support frame, and its width is slightly larger than the battery diameter. A guide rail 34 is provided along the bottom of the long side of the rectangular frame. One end of the electric push rod is fixed to the rectangular frame at the end away from the center of the bottom ring support frame, and the other end is connected to the ring sleeve sleeved on the battery. A movement frame 35 is connected to the ring sleeve 33, a roller 36 is provided at the lower end of the movement frame 35. and the roller is adapted to the guide rail 34. The electric push rod pushes the battery radially move away from or close to the axis within the inner ring wall of the bottom ring support frame.

According to the set control program, the electric push rod gradually pulls a group of batteries to the side and then returns to a position close to the center. This can shift the center of gravity of the bottom of the aerial vehicle and make it tilt in a circular motion, causing the entire aerial vehicle to deflect 360 degrees.

With a point on the circle of the bottom ring support frame 23 as the center, three support arms of equal length are evenly arranged on the plane containing a radius and the axis of the bottom ring support frame to form a support part 232 for the bottom circular buoyancy body. This support parts are evenly distributed on the ring of the bottom ring support frame and locked with a high-resistance polyamide foam material to form a cavity buoyancy body 40. It is then sealed with waterproof plastic cloth on the outside, or a coating fiberglass material is prefabricated into a circumferential cavity body and then is locked with the support parts to form a cavity buoyancy body. The inner ring radius of the cavity buoyancy body 40 is greater than the distance of the long side of the rectangular frame.

At least three wheel sets 233 are fixedly connected to the support parts 232, one of which is a steering wheel. A propeller 2331 is deployed at the center of the steering wheel frame and rotates coaxially with the wheel. The propeller is driven by a motor. This design allows for movement on land and for propulsion and direction control on water via the propeller.

Optionally, at least two sets of center-of-gravity offset arrangement can be installed within the inner ring wall of the bottom ring support frame, and they are symmetrically arranged with respect to the axis M to ensure that the center of gravity of the aerial vehicle is on the axis when all batteries are in their initial positions.

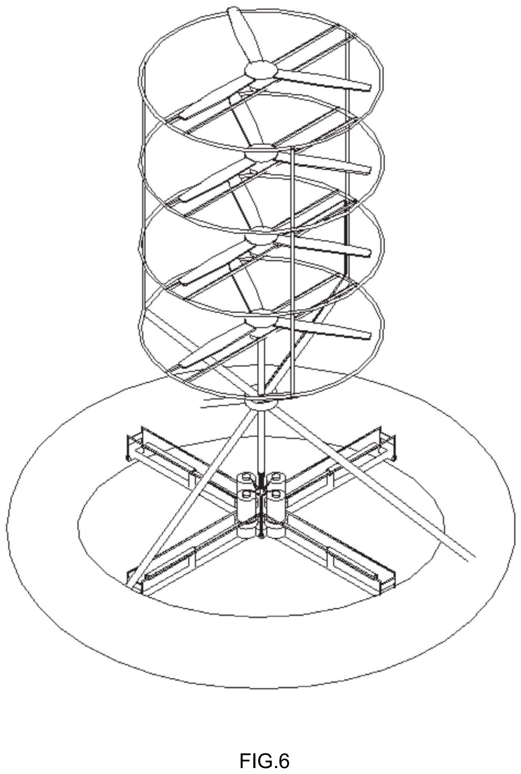

Optionally, referring to FIG. 6, at least one coaxial dual-rotor power system may be provided.

The shape of a hollow buoyancy body can also be a square, a polygonal prism, an ellipsoid, a pyramid, etc.

Since drones need to overcome their own weight to continuously drive the rotor blades to rotate when flying or hovering to shoot videos, which consumes power, the electric drone of this application can sometimes hover in the air and sometimes float on the water surface. At this time, the motor stops rotating, saving power.

The electric drone flight control system receives commands from the remote controller and outputs corresponding signals to the electronic speed controller and battery drive unit. The battery drive unit is specifically an electric actuator. The electronic speed controller converts the DC power from the battery into three-phase power and controls the current intensity and frequency of the three-phase power output to the motor in real time according to the signal, thereby adjusting the motor speed. The battery drive unit then moves the battery to the corresponding position.

The following is the process of realizing each flight maneuver of the aerial vehicle:
Vertical takeoff and landing: After the aerial vehicle leaves the ground, when the lift generated by the rotating propellers is greater than the own weight of the aerial vehicle, the aerial vehicle ascends vertically; when the lift generated by the rotating propellers is less than the own weight of the aerial vehicle, the aerial vehicle descends vertically. When switching from lateral flight to vertical takeoff and landing mode, the flight control system issues commands based on the horizontal speed and direction of lateral flight, causing the battery-driven device to move the battery until the aerial vehicle is upright in the air, thus achieving vertical takeoff and landing.

Hovering: Controlling the vertical ascent and descent of an aerial vehicle. At a specified altitude, when the lift generated by the rotating propellers equals the own weight of the aerial vehicle, the aerial vehicle hovers in the air.

Level flight: The flight control system issues a command, and the batteries are initially positioned around the axis. The electric push rod pushes a battery to move radially away from the axis. At this time, the aerial vehicle tilts in the air, and the lift direction also tilts accordingly. When the lift generated by the rotation of the propeller is large enough, and the vertical component of the lift equals the weight of the aerial vehicle, the horizontal component of the lift pulls the aerial vehicle into level flight.

Oblique ascending flight and oblique decending flight: In level flight, when the lift is increased or decreased, the vertical component of the lift is greater than or less than the weight of the aerial vehicle, and the horizontal component of the lift pulls the aerial vehicle to fly, thus achieving oblique ascending flight or descending flight an angle.

Steering: The flight control system commands one of the first and second motors of the coaxial dual rotor assembly to accelerate or decelerate. The counter-torques generated by the first and second rotor blades, which rotate in opposite directions, are unbalanced, causing the aerial vehicle to turn in the direction of the larger counter-torque. Alternatively, the flight control system can simultaneously command one of the first and second motors to accelerate while the other decelerate, thus achieving steering of the aerial vehicle.

Floating on water: After contact with water, the aerial vehicle floats on the water surface because the buoyancy of the cavity buoyant body is greater than the own weight of the aerial vehicle.

Emergency response: If a strong wind suddenly occurs and the aerial vehicle tilts rapidly in a certain direction, when the attitude sensor detects that the tilt angle of the aerial vehicle is greater than the set value and the angular velocity of the tilting motion is greater than the set value, the flight control system will automatically issue a rapid turning command to make the aerial vehicle turn to fly in the direction of the wind, i.e. fly against the wind, and adjust the turning in real time as the attitude of the aerial vehicle changes, so as to avoid the aerial vehicle flipping in the air within a certain wind range.

Super Emergency Response: When the emergency response cannot effectively control the aerial attitude (the aerial vehicle is in emergency response state for more than 10 seconds), the flight control system automatically commands the battery drive device to move the batteries and change the center of gravity. When the center of gravity of the aerial vehicle is on the center line of the rotor axis, the flight control system automatically commands one of the first and second motors of the coaxial dual rotor assembly to accelerate and the other motor to stop, causing the aerial vehicle to rotate rapidly in the air, forming a gyroscope. Relying on the axis-fixing property of the gyroscope, the aerial vehicle is guaranteed not to flip over within a certain wind range and gradually descends to land on the ground.

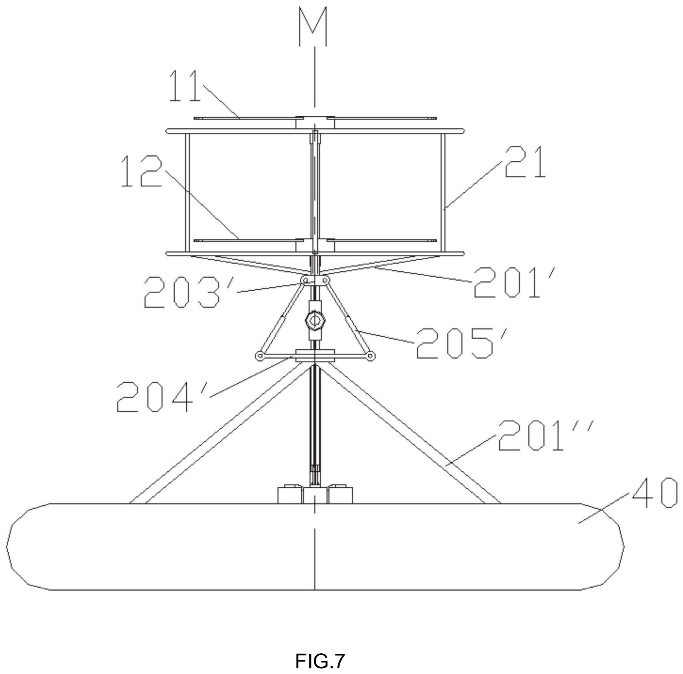

Referring to FIG. 7, it is a schematic view of a coaxial dual-rotor structure of an electric unmanned aerial vehicle according to a second embodiment of this application.

This embodiment is based on the first embodiment but differs in that the chassis support assembly comprises a cylindrical protective frame 21 with openings at the top and bottom and disposed around the periphery of the first rotor blade 11 and the second rotor blade 12, a plurality of support arms, and a bottom ring support frame. The lower end of the cylindrical protective frame with openings at the top and bottom is connected to the support arms 201', preferably three, forming an isosceles inverted cone shape. The stators of the first and second motors are hollow structures, fixedly connected by a rotating shaft 202a' passing through the hollow stators of the first and second motors. The vertex of the isosceles inverted cone formed by the support arms is fixedly connected to a horizontally arranged first crossbar 203', and the lower end of the rotating shaft 202a' passes through the vertex of the isosceles inverted cone, the first crossbar and is hinged to a support shaft 202b'. The first crossbar is symmetrical about the vertex and of equal length on both sides, and the centers of the support shaft and the bottom ring support frame are located on the axis.

Several support bars 201" are evenly distributed at one end on the bottom ring support frame and fixed thereto, and the other end is fixed on the support shaft below the hinge point of the rotating shaft and the support shaft, forming an isosceles pyramid shape. A second crossbar 204' is fixed horizontally at the vertex or top of the pyramid-shaped support rod structure. The second crossbar is of equal length on both sides symmetrical about the vertex of the pyramid-shaped support rod structure. The two ends of each of two electric push arms 205' are respectively hinged between the second crossbar and the first crossbar on two sides of the axis. One end of the electric push arm is hinged to the end of the first crossbar, and the other end is hinged to the end of the second crossbar. The extension and retraction of the two electric push arms causes the first and second rotor blades to deflect at the hinge point of the rotating shaft and the support shaft.

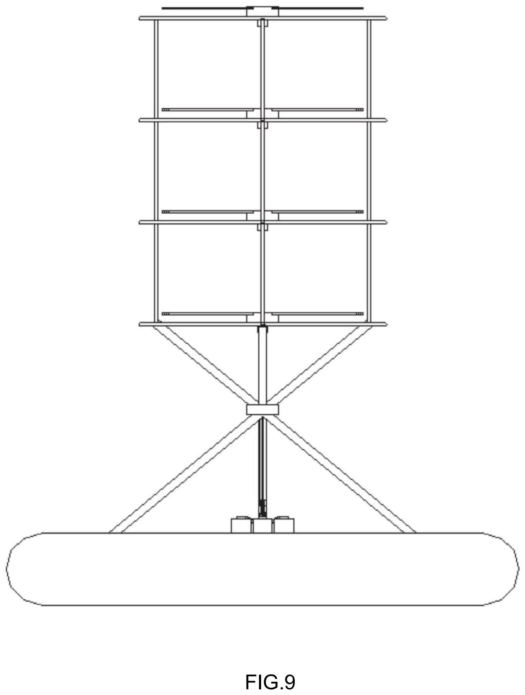

Optionally, referring to FIG. 9, at least one coaxial dual-rotor power system may be provided.

### Differences in flight maneuvers:

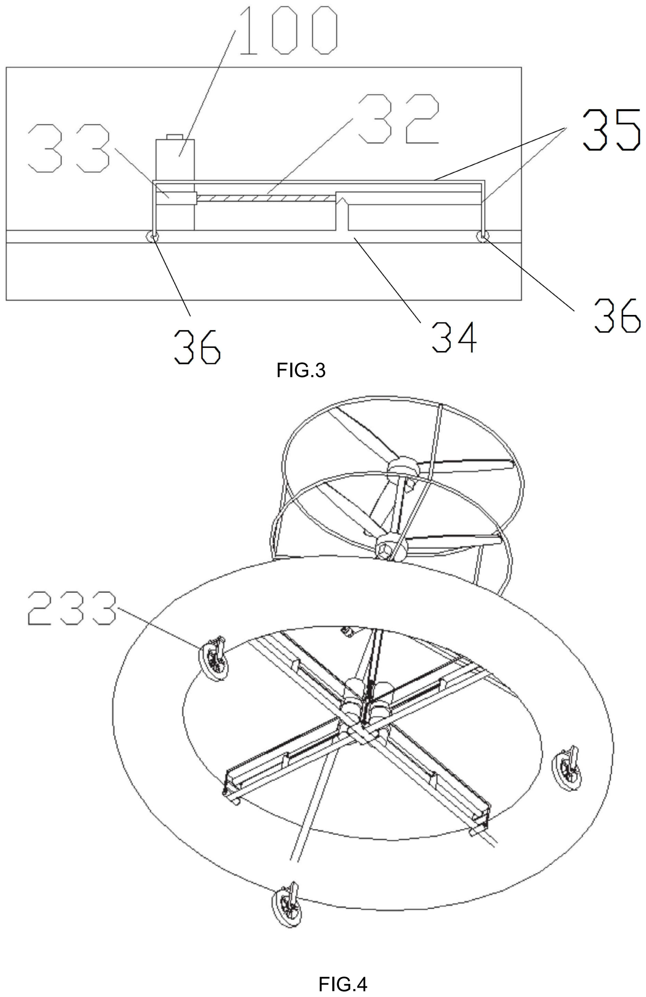

Level flight: Referring to FIG. 4, when the flight control system controls one electric push arm to retract and the other electric push arm to extend, it forces the rotating shaft fixedly connected to the first crossbar and the cylindrical protective frame with openings at the top and bottom to drive the first and second rotor blades to deviate from the axis M, causing the coaxial dual rotor to rotate as well. At this time, the lift generated by the rotation of the rotor blades tilts, and this tilted lift is decomposed into a vertical component and a horizontal component. When the lift is large enough, and the vertical component is equal to the weight of the aerial vehicle itself, the horizontal component pulls the aerial vehicle to level flight.

Vertical takeoff and landing: When switching from level flight to vertical takeoff and landing mode, the flight control system controls the electric push arms on both sides of the axis to retract to their original positions, the axis of the two rotors returns to a vertical state, and the flight control system simultaneously controls the batteries to move back to initial positions, so that the center of gravity of the aerial vehicle is on the axis, thus achieving vertical takeoff and landing.

Super Emergency Response: When the emergency response cannot effectively control the aerial attitude (the aerial vehicle is in emergency response state for more than 10 seconds), the flight control system commands the axis of the dual rotors to return to a vertical position. At the same time, it commands the batteries to move so that the center of gravity of the aerial vehicle is on the axis. The flight control system then automatically commands one of the first and second motors to accelerate and the other motor to stop, causing the aerial vehicle to rotate rapidly in the air, forming a self-rotating gyroscope. Relying on the axis-fixing property of the gyroscope, the aerial vehicle is guaranteed not to flip over within a certain wind range and gradually descends to land on the ground.

## Claims

1. An aerial vehicle, **characterised in that** comprising a coaxial multi-rotor power system which is centrally arranged, a chassis support assembly supporting the coaxial multi-rotor power system, counterweight blocks disposed below the chassis support assembly, and center-of-gravity offset arrangements which are respectively arranged to drive the counterweight blocks respectively to make an eccentric displacement, thereby shifting a center of gravity of the aerial vehicle and causing the entire aerial vehicle to deflect accordingly.

2. The aerial vehicle according to claim 1, **characterised in that** the counterweights are batteries that power the aerial vehicle, and the batteries are centrally or symmetrically distributed, a weight of the batteries is greater than a total weight of the chassis support assembly and the coaxial dual-rotor power system, the center of gravity of the aerial vehicle is located in a lower half of a longitudinal height of the aerial vehicle, so that the aerial vehicle is statically in a top-light and bottom-heavy tumbler state.

3. The aerial vehicle according to claim 1, **characterised in that** the chassis support assembly comprises a cylindrical protective frame with openings at the top and bottom, a bottom ring support frame, and support rods for connecting the cylindrical protective frame and the bottom ring support frame, wherein the cylindrical protective frame is located around rotors of the coaxial multi-rotor power system, and a center line of the cylindrical protective frame, a rotor rotation center, and an axis of the bottom ring support frame coincide.

4. The aerial vehicle according to claim 3, **characterised in that** two parallel circles formed by the cylindrical protective frame and the bottom ring support frame form a generatrix of a frustum, and an angle between the generatrix and a diameter of the bottom ring support frame is an acute angle.

5. The aerial vehicle according to claim 3, **characterised in that** each center-of-gravity offset arrangement comprises a rectangular frame, an electric push rod, and a ring sleeve fitted on the battery, a long side of the rectangular frame is radially arranged within an inner ring wall of the bottom ring support frame, one end of the electric push rod is fixed to the rectangular frame, and the other end thereof is connected to the ring sleeve, wherein by extension and retraction of the electric push rod, the corresponding battery moves away from or close to the axis line along the long side of the rectangular frame, thereby achieving the offset of the center of gravity of the aerial vehicle.

6. The aerial vehicle according to claim 5, **characterised in that** four sets of the center-of-gravity offset arrangement are symmetrically arranged, the electric push rods gradually pull one battery to a side and then back to a position closer to a center, so as to allow the the center of gravity at a bottom of the aerial vehicle to shift and allow the aerial vehicle to tilt in a circular motion, causing the entire aerial vehicle to rotate 360 degrees.

7. The aerial vehicle according to claim 3, **characterised in that** the coaxial multi-rotor power system is configured as a dual-rotor power system which comprises a first motor and a second motor, wherein stators of the two motors are respectively fixedly connected to upper and lower horizontal crossbars arranged in the cylindrical protective frame, wherein a rotor of the first motor is fixedly connected to a first rotor blade, and a rotor of the second motor is fixedly connected to a second rotor blade, the first motor and the second motor rotate in two opposite directions on a same axis.

8. The aerial vehicle according to claim 7, **characterised in that** the dual-rotor power system further comprises two electronic speed controllers which are respectively arranged to control the start/stop status and speed of the first motor and the second motor.

9. The aerial vehicle according to claim 3, **characterised in that** the coaxial multi-rotor power system is configured as a dual-rotor power system, which comprises a first motor and a second motor, wherein a rotor of the first motor is fixedly connected to a first rotor blade, and a rotor of the second motor is fixedly connected to a second rotor blade, wherein the first motor and the second motor rotate along a same axis, wherein the support rods comprises first support arms and a rotating shaft, the bottom opening of the cylindrical protective frame is evenly distributed with a plurality of the first support arms to form an isosceles inverted pyramid, stators of the first motor and the second motor are hollow structures, a rotating shaft passes through the hollow stators of the first motor and the second motor, and a vertex of the isosceles inverted pyramid to connect the hollow stators of the first motor and the second motor.

10. The aerial vehicle according to claim 9, **characterised in that** the support rods further comprise second support bars, with one end of a plurality of the second support bars evenly fixed on the bottom ring support frame, and the other end forming an isosceles pyramid or isosceles frustum.

11. The aerial vehicle according to claim 10, **characterised in that** a second crossbar is horizontally set at a top of the isosceles pyramid or isosceles frustum, and a support shaft is vertically set perpendicular to the second crossbar and coincident with the axis, a pivot located below the vertex of the isosceles inverted pyramid is hinged to the support shaft, a first crossbar is horizontally set at the vertex of the isosceles inverted pyramid and at a lower side of the rotating shaft, wherein on two sides of the axis, two ends of each of two electric push arms are respectively hinged between the first crossbar and the second crossbar, wherein extension and retraction of the two electric push arms cause the first rotor blade and the second rotor blade to deflect or return to the axis by rotating at the hinge point between the axis and the support shaft.

12. The aerial vehicle according to claim 3, **characterised in that** the bottom ring support frame is locked with a high-impact polyamide foam material outside to form a cavity buoyancy body, and then sealed with a waterproof plastic cloth; or a fiberglass material fabric coating is prefabricated into a circumferential cavity body and then locked with the bottom ring support frame to form a cavity buoyancy body, wherein the cavity buoyancy body provides buoyancy for the aerial vehicle to float on water surface.

13. The aerial vehicle according to claim 3, **characterised in that** at least three wheel sets are evenly fixedly connected to the bottom ring support frame in a circumferential direction, one of which is a steering wheel, and a propeller is deployed at the center of a steering wheel frame to rotate coaxially with the steering wheel.
